# EUROPÄISCHE PATENTSCHRIFT

(11) **EP 3 105 004 B1**
(45) Veröffentlichungstag und Bekanntmachung des Hinweises auf die Patenterteilung: **29.08.2018**
(21) Anmeldenummer: 15701195.8
(22) Anmeldetag: 23.01.2015
(51) Int. Cl.: B23K 26/26, B23K 26/32, F16B 5/06

(54) **VERFAHREN ZUM HERSTELLEN EINER BAUTEILVERBINDUNG AUS ZWEI UNTERSCHIEDLICHEN MATERIALEN**
METHOD OF PRODUCING A COMPONENT CONNECTION FROM TWO DIFFERENT MATERIALS
PROCÉDÉ D'ASSEMBLAGE D'ÉLÉMENTS COMPOSÉS DE DEUX MATÉRIAUX DIFFÉRENTS

(30) Priorität: 13.02.2014 DE 102014202629
(43) Veröffentlichungstag der Anmeldung: 21.12.2016
(73) Patentinhaber: Bayerische Motoren Werke Aktiengesellschaft, 80809 München (DE)
(72) Erfinder: LANGRIEGER, Hans, 80634 München (DE); NIEKERK, Johann, 80993 München (DE)
(86) Internationale Anmeldenummer: PCT/EP2015/051298
(87) Internationale Veröffentlichungsnummer: WO 2015/121047

(56) Entgegenhaltungen:
- DE-A1-102011 079 483
- US-A1- 2004 052 574
- US-A1- 2007 284 341

## Beschreibung

Verfahren zum Herstellen einer Bauteilverbindung gemäß den Merkmalen des Patentanspruches 1.

Aus der DE 10 2011 079 483 A1 (Basis für den Oberbegriff des Anspruchs 1) ist ein Verfahren zum Verbinden zweier Bauteile bekannt, wobei zunächst ein erstes Bauteil bereitgestellt wird, von dem ein männliches Fixierelement, bei dem es sich um eine Kugel handeln kann, absteht. Auf das männliche Fixierelement wird ein Clipelement aufgeclipst. Ein zweites Bauteil, welches ein durch ein Durchgangsloch gebildetes weibliches Fixierelement aufweist, wird auf das auf das männliche Fixierelement aufgeclipste Clipelement aufgeklemmt.

Zum technischen Hintergrund der Erfindung zählen die US 2004/052574 A1 sowie die US 2007/0284341 A1.

Aus der DE 10 2010 028 322 A1 ist ein Verfahren zum Verbinden eines ersten Fahrzeugbauteils mit einem zweiten Fahrzeugbauteil bekannt. Dabei werden zunächst die beiden Fahrzeugbauteile zusammengesteckt. Hierzu ist an einem der beiden Fahrzeugbauteile eine Kugel angebracht, die in ein in dem anderen Fahrzeugbauteil vorgesehenes Loch klemmend eingesteckt wird. Nach dem Zusammenstecken der beiden Fahrzeugbauteile werden diese verschweißt. Aufgabe der Erfindung ist es, das oben beschriebene Verfahren weiter zu verbessern, derart, dass es möglichst vielseitig einsetzbar ist und eine Bauteilverbindung mit besonders hoher Festigkeit entsteht.

Diese Aufgabe wird durch die Merkmale des Patentanspruches 1 gelöst.

Vorteilhafte Ausgestaltungen und Weiterbildungen der Erfindung sind den Unteransprüchen zu entnehmen.

Ausgangspunkt der Erfindung ist ein Verfahren zum Herstellen einer Bauteilverbindung, wobei zunächst ein aus einem ersten Material bestehendes Blech bereitgestellt wird. Bei dem ersten Blech kann es sich insbesondere um ein Stahlblech handeln. Auf das erste Blech wird eine Kugel oder ein kugelähnliches Element aufgeschweißt. Die Kugel besteht aus demselben Material wie das erste Blech, z.B. also aus Stahl. Ferner wird ein zweites Blech bereitgestellt, welches aus einem sich von dem ersten Material unterscheidenden zweiten Material, z.B. Aluminium besteht. In dem zweiten Blech wird ein Durchgangsloch erzeugt, wobei zumindest ein Randabschnitt oder der gesamte umlaufende Rand des Durchgangslochs zu einer Seite des zweiten Blechs hin umgebogen wird, wodurch sich mindestens ein klemmkragenartiges, von dem zweiten Blech abstehendes Element ergibt.

In einem nächsten Schritt werden die beiden Bleche zusammengesetzt und zwar derart, dass die von dem ersten Blech abstehende Kugel bzw. das kugelähnliche Element von der dem mindestens einen klemmkragenartigen Element abgewandten Seite des zweiten Blechs her in das Durchgangsloch eingeführt wird. Die Kugel bzw. das kugelähnliche Element wird so weit in das Durchgangsloch eingeführt, dass die Kugel oder das kugelähnliche Element zumindest teilweise auf der Seite des mindestens einen klemmkragenartigen Elements aus dem Durchgangsloch heraus ragt.

Der Kern der Erfindung besteht (insbesondere auch in Abgrenzung zu der eingangs genannten DE 10 2010 028 322 A1) darin, dass das zweite Blech mit der Kugel oder dem kugelähnlichen Element und/oder mit dem ersten Blech durch zumindest teilweises oder vollständiges Aufschmelzen des mindestens einen klemmkragenartigen Elements verschweißt wird. Das teilweise oder vollständige Aufschmelzen des mindestens einen klemmkragenartigen Elements führt gemäß der Erfindung dazu, dass aufgeschmolzenes zweites Material in einen zwischen dem ersten Blech und der Kugel oder dem kugelähnlichen Element vorgesehenen Hinterschnittbereich fließt, also in den unteren Bereich der Kugel oder des kugelähnlichen Elements, in dem die Kugel oder das kugelähnliche Element mit dem ersten Blech verschweißt ist. Dadurch ergibt sich zwischen der Kugel oder dem kugelähnlichen Element und dem zweiten Blech und/oder dem ersten Blech zusätzlich zu dem durch die Schweißverbindung gebildeten Stoffschluss ein Formschluss. Nach dem Verschweißen liegt das zweite Blech bzw. die sich aus aufgeschmolzenem Material ergebende Schweißnaht innig und unmittelbar im Hinterschnittbereich an der Kugel oder dem kugelähnlichen Element an. Vorzugsweise gibt es zwischen dem zweiten Blech und der Kugel bzw. dem kugelähnlichen Element und dem ersten Blech keinerlei Hohlräume oder Lufteinschlüsse. Insbesondere kann die Schweißung so erfolgen, dass sich die Schweißnaht rings um die Kugel bzw. das kugelähnliche Element erstreckt, wodurch sich eine fluiddichte Verbindung zwischen dem zweiten Blech und der Kugel bzw. dem kugelähnlichen Element gemäß der Erfindung ergibt. Nach einer Weiterbildung der Erfindung werden die beiden Bleche klemmend zusammengesetzt, derart, dass das mindestens eine klemmkragenartige Element von außen her gegen die Kugel oder das kugelähnliche Element drückt.

Ferner kann zwischen das erste Blech und das zweite Blech ein Kleber bzw. eine Klebstoffschicht eingebracht werden. Vorzugsweise sollte ein Bereich um die Kugel oder das kugelähnliche Element herum frei von Klebstoff bleiben. Insbesondere sollte kein Klebstoff in Bereichen aufgebracht werden, in denen das erste bzw. zweite Blech beim Schweißen sehr heiß wird, da dies zu einem Verbrennen des Klebstoffs führen könnte. Beispielsweise kann vorgesehen sein, dass in einem Bereich von 2, 3, 5, 10, 15, 20, 25, 30, 35 oder 40 mm um die Kugel oder das kugelähnliche Element herum kein Klebstoff zwischen das erste und das zweite Blech eingebracht wird.

Nach einer Weiterbildung der Erfindung erfolgt das Verschweißen so, dass das zweite Blech über eine umlaufend glatte Schweißnaht glatt in das kugelige oder kugelähnliche Element übergeht. Insbesondere kann vorgesehen sein, dass die Schweißnaht sich gleichmäßig um die gesamte Kugel oder das kugelähnliche Element herum erstreckt, wobei die Schweißnaht punktsymmetrisch bzgl. einer Normalen sein kann, die durch den Mittelpunkt und durch den Aufstandspunkt der Kugel oder des kugelähnlichen Elements auf dem ersten Blech verläuft.

Wie bereits erwähnt, ist die Erfindung insbesondere für so genannte Mischbauverbindungen geeignet, d.h. für Bauteilverbindungen, bei denen das erste Bauteil aus einem anderen Material als das zweite Bauteil besteht. Beispielsweise kann das erste Bauteil aus Stahl und das zweite Bauteil aus Aluminium bestehen. Der Begriff "Aluminium" umfasst in diesem Zusammenhang sowohl reines Aluminium als auch Aluminiumlegierungen. Beim Verschweißen werden somit das bzw. die klemmkragenartigen Elemente des z.B. aus Aluminium bestehenden zweiten Bauteils ausgeschmolzen.

Ein weiterer wesentlicher Gedanke der Erfindung besteht darin, dass das Verschweißen berührungsfrei mittels einer elektronisch gesteuerten, in einem Abstand von einem kugeligen oder kugelähnlichen Element angeordneten Schweißvorrichtung, insbesondere mittels einer Laserschweißvorrichtung, erfolgt. Ein derartiges "Remote-Laserschweißen" hat den Vorteil, dass keinerlei Schweißwerkzeug unmittelbar an die Schweißstelle, d.h. in den Bereich der Kugel oder des kugelähnlichen Elements herangeführt werden muss. Durch "Remote-Laserschweißen" können also auch an vergleichsweise schwer zugänglichen Bauteilbereichen in einfacher Weise hochfeste und qualitativ hochwertige "Mischbauverbindungen" hergestellt werden, was der Erfindung vielfältige Anwendungsmöglichkeiten, insbesondere auch im Fahrzeugkarosseriebau ermöglicht.

Gemäß der Erfindung wird mittels einer elektronischen, insbesondere mittels einer optoelektronischen Messeinrichtung berührungslos die Position des kugeligen oder kugelähnlichen Elements im Raum detektiert. Aufgrund der Kugelform des "Verbindungselements" ist im Vergleich zu allen anderen (nichtkugelförmigen) Bauteilgeometrien eine besonders einfache optoelektronische Ermittlung des Mittelpunkts der Kugel bzw. des kugelähnlichen Elements möglich. Die von der Messeinrichtung gelieferten Geometrie- bzw. Positionsdaten des kugeligen oder kugelähnlichen Elements können insbesondere der Schweißvorrichtung bzw. einer Steuerelektronik der Schweißvorrichtung zur Verfügung gestellt werden. Die Schweißvorrichtung kann dementsprechend in Abhängigkeit von den gemessenen Positionsdaten gesteuert werden.

Im Folgenden wird die Erfindung im Zusammenhang mit der Zeichnung näher erläutert. Es zeigen:
- Fig. 1: eine Bauteilverbindung gemäß der Erfindung vor dem Verschweißen; und
- Fig. 2: eine Bauteilverbindung nach dem Verschweißen.

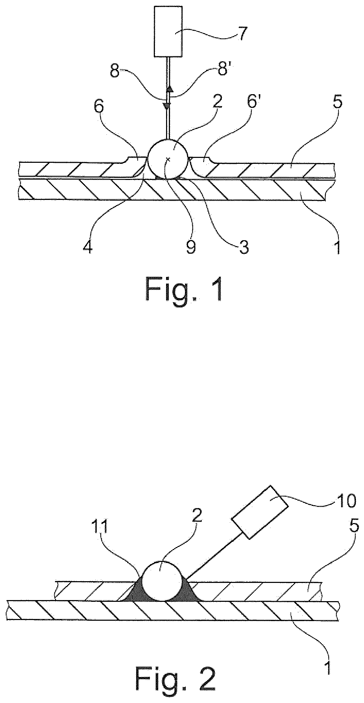

Fig. 1 zeigt ein erstes Blech 1, bei dem es sich bspw. um ein Stahlblech handeln kann. Auf das erste Blech 1 ist eine Kugel oder ein kugelähnliches Element 2 aufgeschweißt. Die Schweißverbindung zwischen dem ersten Blech 1 und der Kugel oder dem kugelähnlichen Element 2 ist mit dem Bezugszeichen 3 gekennzeichnet. Die Kugel oder das kugelähnliche Element 2 besteht aus demselben Material wie das erste Blech 1.

Auf das erste Blech 1 ist ein zweites, mit einem Durchgangsloch 4 versehenes Blech 5 aufgesetzt. Das zweite Blech 5 besteht aus einem anderen Material als das erste Blech 1 und die Kugel oder das kugelähnliche Element 2. Beispielsweise besteht das zweite Blech 5 aus Aluminium oder einer Aluminiumlegierung.

Ein Rand des zweiten Blechs 5 ist nach oben hin umgebogen bzw. aufgebogen. Der Rand 6 kann umlaufend oder an in Umfangsrichtung voneinander beabstandeten Stellen um- bzw. aufgebogen sein, wodurch sich ein umlaufender Klemmkragen oder mehrere in Umfangsrichtung voneinander beabstandete klemmkragenartige Elemente 6, 6' ergeben.

Das Durchgangsloch 4 und die klemmkragenartigen Elemente 6, 6' sind so bemessen, dass ihre lichte Weite etwas geringer als der Durchmesser der Kugel oder des kugelähnlichen Elements 2 ist.

Das zweite Blech 5 wird so auf das erste Blech 1 aufgesetzt, dass die Kugel bzw. das kugelähnliche Element 2 von der den klemmkragenartigen Elementen 6, 6' abgewandten Seite des zweiten Blechs 5 her in das Durchgangsloch 4 eingeführt wird. Der Durchmesser der Kugel bzw. des kugelähnlichen Elements 2 und die klemmkragenartigen Elemente 6, 6' und die Dicke des zweiten Blechs 5 sind so aufeinander abgestimmt, dass die Kugel bzw. das kugelähnliche Element 2 zumindest ein Stück weit aus dem Durchgangsloch 4 heraussteht. Die klemmkragenartigen Elemente 6, 6' drücken dabei von außen her gegen die Kugel bzw. das kugelähnliche Element, wodurch dieses klemmend an dem zweiten Blech 5 fixiert ist.

Mittels eines optoelektronischen Messystems 7, z.B. mittels einer Kamera und einer geeigneten Auswerteelektronik, wird gemäß der Erfindung in einfacher Weise die Position der Kugel bzw. des kugelähnlichen Elements ermittelt.

Durch Bestrahlen der Kugel bzw. des kugelähnlichen Elements 2 mit Licht an unterschiedlichen Stellen gibt es bei jeder denkbaren Ausrichtung des optoelektronischen Messssystems 7 genau eine Relativposition, bei der ein auf die Kugel bzw. das kugelähnliche Element 2 auftreffender Lichtstrahl total reflektiert wird, d.h. bei der der auf die Kugel bzw. das kugelähnliche Element 2 zulaufende Lichtstrahl 8 mit dem reflektierten Lichtstrahl 8' zusammenfällt. Der Mittelpunkt 9 der Kugel bzw. des kugelähnlichen Elements 2 muss naturgemäß auf einer "Verlängerung" der Strahlen 8 bzw. 8' liegen. Auf diese Weise kann, wenn man den Durchmesser der Kugel kennt, in einfacher Weise die Position des Kugelmittelpunkts und somit der gesamten Kugel im Raum ermittelt werden.

In einem nächsten Schritt wird unter Verwendung der gemessenen Positionsdaten der Kugel bzw. des kugelähnlichen Elements 2 mittels einer entfernt von der Kugel bzw. dem kugelähnlichen Element 2 angeordneten Schweißvorrichtung 10 ("Remote-Laser-Schweißvorrichtung") berührungslos eine Schweißverbindung hergestellt. Mittels der Laser-Schweißvorrichtung 10 werden die klemmkragenartigen Elemente 6, 6' bzw. im Falle eines umlaufenden Klemmkragens der umlaufende Klemmkragen und/oder ein Teil der Kugel bzw. des kugelähnlichen Elements 2 und/oder ein Teil des ersten Bauteils 1 aufgeschmolzen. Auf diese Weise kann sehr einfach eine umlaufende, qualitativ äußerst hochwertige, glatte Schweißnaht 11 erzeugt werden.

Wie aus Figur 2 ersichtlich ist, geht die Schweißnaht 11 glatt von dem zweiten Bauteil 5 in die Kugel bzw. das kugelähnliche Element 2 über. Aufgeschmolzenes Material des zweiten Bauteils 5 (Klemmkragenmaterial) fließt dabei in einen zwischen der Kugel bzw. dem kugelähnlichen Element 2 und dem ersten Blech 1 befindlichen Hinterschnittbereich. Der Hinterschnittbereich wird vorzugsweise vollständig mit Schweißmaterial ausgefüllt, wodurch sich zwischen dem zweiten Blech 5 und der Kugel bzw. dem kugelähnlichen Element 2 eine fluiddichte Verbindung ergibt.

Da das aufgeschmolzene Material des zweiten Blechs 5 und/oder der Kugel bzw. des kugelähnlichen Elements 2 und/oder des ersten Bauteils 1 in den Hinterschnittbereich fließt und diesen vorzugsweise vollständig ausfüllt, ergibt sich zusätzlich zu der durch die Schweißverbindung gebildeten stoffschlüssigen Verbindung ein Formschluss. Auf diese Weise können auch bei "Mischbauverbindungen", d.h. bei Bauteilverbindungen, bei denen die beiden Bauteile aus unterschiedlichen Materialien bestehen, sehr hohe Festigkeiten erzielt werden.

## Patentansprüche

1. Verfahren zum Herstellen einer Bauteilverbindung mit folgenden Schritten:
- Bereitstellen eines ersten Blechs (1), welches aus einem ersten Material besteht,
- Aufschweißen einer Kugel oder eines kugelähnlichen Elements (2), welche bzw. welches ebenfalls aus erstem Material besteht, auf das erste Blech (1),
- Bereitstellen eines zweiten Blechs (5), welches aus einem sich von dem ersten Material unterscheidenden zweiten Material besteht,
- Herstellen eines Durchgangslochs (4) in dem zweiten Blech (5),
**gekennzeichnet durch die Schritte, dass**
- zumindest ein Randabschnitt (6, 6') oder der gesamte umlaufende Rand des Durchgangslochs (4) zu einer Seite des zweiten Blechs (5) hin um- oder aufgebogen wird, wodurch sich mindestens ein klemmkragenartiges Element (6, 6') ergibt,
- Zusammensetzen der beiden Bauteile (1, 5) derart, dass die von dem ersten Blech (1) abstehende Kugel oder das kugelähnliche Element (2) von der dem mindestens einen klemmkragenartigen Element (6, 6') abgewandten Seite des zweiten Blechs (5) in das Durchgangsloch (4) so weit eingeführt wird, dass die Kugel oder das kugelähnliche Element (2) zumindest teilweise auf der Seite des mindestens einen klemmkragenartigen Elements (6, 6') aus dem Durchgangsloch (4) heraus ragt,
- Verschweißen des zweiten Blechs (5) mit der Kugel oder dem kugelähnlichen Element (2) und/oder mit dem ersten Blech (1) durch zumindest teilweise Aufschmelzen des mindestens einen kiemmkragenartigen Elements (6, 6'), so dass aufgeschmolzenes zweites Material in einen zwischen dem ersten Blech (1) und der Kugel oder dem kugelähnlichen Element (2) vorgesehenen Hinterschnittbereich fließt, so dass sich zwischen der Kugel oder dem kugelähnlichen Element (2) und dem zweiten Blech (5) und/oder dem ersten Blech (1) zusätzlich zu einem Stoffschluss ein Formschluss ergibt,
- durch das Verschweißen die Kugel oder das kugelähnliche Element (2) fluiddicht mit dem zweiten Blech (5) verbunden wird und
- mittels einer elektronischen, insbesondere mittels einer optoelektronischen Messeinrichtung (7) berührungslos die Position des kugeligen oder kugelähnlichen Elements (2) im Raum und/oder relativ zu dem ersten und/oder dem zweiten Bauteil (5) detektiert wird.

2. Verfahren nach Anspruch 1, **dadurch gekennzeichnet, dass** die beiden Bleche (1, 5) klemmend zusammengesetzt werden, derart, dass das mindestens eine klemmkragenartige Element (6, 6') von außen her gegen die Kugel und/oder das kugelähnliche Element (2) drückt.

3. Verfahren nach Anspruch 1 oder 2, **dadurch gekennzeichnet, dass** zwischen das erste Blech (1) und das zweite Blech (5) eine Klebstoffschicht eingebracht wird.

4. Verfahren nach Anspruch 3, **dadurch gekennzeichnet, dass** ein Bereich um die Kugel oder das kugelähnliche Element (2) herum frei von Klebstoff bleibt.

5. Verfahren nach einem der Ansprüche 1 bis 4, **dadurch gekennzeichnet, dass** das Verschweißen so erfolgt, dass das zweite Blech (5) über eine Schweißnaht (11) umlaufend glatt in das kugelige oder kugelähnliche Element (2) übergeht.

6. Verfahren nach Anspruch 5, **dadurch gekennzeichnet, dass** die Schweißnaht (11) sich gleichmäßig um die gesamte Kugel oder das kugelähnliche Element (2) herum erstreckt, wobei die Schweißnaht (11) punktsymmetrisch ist bzgl. einer Normalen, die durch den Mittelpunkt (9) und einem Aufstandspunkt der Kugel oder des kugelähnlichen Elements (2) auf dem ersten Blech (1) verläuft.

7. Verfahren nach einem der Ansprüche 1 bis 6, **dadurch gekennzeichnet, dass** das erste Material ein Stahl ist.

8. Verfahren nach einem der Ansprüche 1 bis 7, **dadurch gekennzeichnet, dass** das zweite Material Aluminium oder eine Aluminiumlegierung ist.

9. Verfahren nach einem der Ansprüche 1 bis 8, **dadurch gekennzeichnet, dass** die Schweißnaht (11) berührungsfrei mittels einer elektronisch gesteuerten, in einem Abstand von einem kugeligen oder kugelähnlichen Element angeordneten Schweißvorrichtung (10), insbesondere eine Laser-Schweißvorrichtung, erzeugt wird.

10. Verfahren nach Anspruch 1, **dadurch gekennzeichnet, dass** die Messeinrichtung (7) der Schweißvorrichtung (10) Informationen bereitstellt, welche die detektierte Position des kugeligen und des kugelähnlichen Elements (2) beschreiben.

## Claims

1. A method for producing a component connection, having the following steps:
- making available a first metal sheet (1), which comprises a first material,
- welding a sphere or a sphere-like element (2), which likewise comprises the first material, onto the first metal sheet (1),
- making available a second metal sheet (5), which consists of a second material different from the first material,
- producing a through-hole (4) in the second metal sheet (5),
**characterised by the steps that**
- at least one edge portion (6, 6') or the entire circumambient edge of the through-hole (4) is bent over or up towards one side of the second metal sheet (5), as a result of which at least one clamping-collar-type element (6, 6') is yielded,
- assembling the two components (1, 5) such that the sphere protruding from the first metal sheet (1) or the sphere-like element (2) is introduced so far into the through-hole (4) from that side of the second metal sheet (5) which is remote from the at least one clamping-collar-type element (6, 6') that the sphere or the sphere-like element (2) protrudes at least partially out of the through-hole (4) on the side of the at least one clamping-collar-type element (6, 6'),
- welding the second metal sheet (5) to the sphere or the sphere-like element (2) and/or to the first metal sheet (1) by at least partially fusing the at least one clamping-collar-type element (6, 6'), so that fused second material flows into an undercut region provided between the first metal sheet (1) and the sphere or the sphere-like element (2), so that a positive connection is produced between the sphere or the sphere-like element (2) and the second metal sheet (5) and/or the first metal sheet (1) in addition to a material-formed bond,
- the welding connects the sphere or the sphere-like element (2) in fluid-tight manner to the second metal sheet (5), and
- the position of the spherical or sphere-like element (2) in space and/or relative to the first and/or the second component (5) is detected by means of an electronic, in particular by means of an optoelectronic, measuring means (7) in contactless manner.

2. A method according to Claim 1, **characterised in that** the two metal sheets (1, 5) are assembled in clamping manner such that the at least one clamping-collar-type element (6, 6') presses from the outside against the sphere and/or the sphere-like element (2).

3. A method according to Claim 1 or Claim 2, **characterised in that** an adhesive layer is introduced between the first metal sheet (1) and the second metal sheet (5).

4. A method according to Claim 3, **characterised in that** a region around the sphere or the sphere-like element (2) remains free from adhesive.

5. A method according to one of Claims 1 to 4, **characterised in that** the welding takes place such that the second metal sheet (5) merges in circumambient manner and smoothly into the spherical or sphere-like element (2) via a weld seam (11).

6. A method according to Claim 5, **characterised in that** the weld seam (11) extends uniformly around the entire sphere or the sphere-like element (2), the weld seam (11) being point-symmetrical relative to a normal which runs through the centre point (9) and a contact point of the sphere or the sphere-like element (2) on the first metal sheet (1).

7. A method according to one of Claims 1 to 6, **characterised in that** the first material is a steel.

8. A method according to one of Claims 1 to 7, **characterised in that** the second material is aluminium or an aluminium alloy.

9. A method according to one of Claims 1 to 8, **characterised in that** the weld seam (11) is produced in contactless manner by means of an electronically controlled welding device (10) arranged at a distance from a spherical or sphere-like element, especially a laser-welding device.

10. A method according to Claim 1, **characterised in that** the measuring means (7) of the welding device (10) provides information which describes the detected position of the spherical and the sphere-like element (2).

## Revendications

1. Procédé de fabrication d'un assemblage de pièces comprenant les étapes suivantes consistant à :
- se procurer une première tôle (1) réalisée en un premier matériau,
- souder sur la première tôle (1), une sphère ou un élément sphéroïdale (2) qui est également réalisé dans le premier matériau,
- se procurer une seconde tôle (5) qui est réalisée en un second matériau différent du premier matériau,
- faire un perçage traversant (4) dans la seconde tôle (5),
**caractérisé par**
les étapes consistant à :
- recourber au moins un segment de bord (6, 6') ou la totalité du bord périphérique du perçage traversant (4) vers une face de la seconde tôle (5), de façon à obtenir au moins un élément (6, 6') du type collerette de serrage,
- assembler les deux pièces (1, 5) de sorte que la sphère ou l'élément sphéroïdale (2) dépassant de la première tôle (1) soit introduit dans le perçage traversant (4) à partir de la face de la seconde tôle (5) située à l'opposé de l'élément (6, 6') similaire à une collerette de serrage suffisamment pour que la sphère ou l'élément sphéroïdale (2) dépasse au moins partiellement du perçage traversant (4) sur la face de l'élément (6, 6') similaire à une collerette de serrage,
- souder la seconde tôle (5) avec la sphère ou l'élément sphéroïdale (2) et/ou avec la première tôle (1) par fusion au moins partielle de l'élément (6, 6') similaire à une collerette de serrage de sorte que du second matériau fondu s'écoule dans une zone en contre-dépouille située entre la première tôle (1) et la sphère ou l'élément sphéroïdale (2) de façon à obtenir une liaison par la forme, entre la sphère ou l'élément sphéroïde (2) et la seconde tôle (5) et/ou la première tôle (1), en plus d'une liaison par la matière,
- par la soudure, la sphère ou l'élément sphéroïdale (2) étant relié à la seconde tôle (5) de façon étanche aux fluides, et
- détecter sans contact au moyen d'un dispositif de mesure électronique en particulier au moyen d'un dispositif de mesure optoélectronique (7), la position de la sphère ou de l'élément sphéroïdale (2) dans l'espace et/ou par rapport à la première pièce et/ou à la seconde pièce (5).

2. Procédé conforme à la revendication 1,
**caractérisé en ce que**
les deux tôles (1, 5) sont assemblées par serrage de sorte que l'élément similaire a une collerette de serrage (6, 6') s'appuie par l'extérieur contre la sphère et/ou l'élément sphéroïdale (2).

3. Procédé conforme à la revendication 1 ou 2,
**caractérisé en ce qu'**
une couche de colle est appliquée entre la première tôle (1) et la seconde tôle (5).

4. Procédé conforme à la revendication 3,
**caractérisé en ce qu'**
une zone située autour de la sphère ou de l'élément sphéroïdale (2) reste exempte de colle.

5. Procédé conforme à l'une des revendications 1 à 4,
**caractérisé en ce que**
la soudure est effectuée de sorte que la seconde tôle (5) se prolonge, par un cordon de soudure (11) périphérique lisse par la sphère ou l'élément sphéroïdale (2).

6. Procédé conforme à la revendication 5,
**caractérisé en ce que**
le cordon de soudure (11) s'étend uniformément autour de la totalité de la sphère ou de l'élément sphéroïdale (2), le cordon de soudure (11) ayant une symétrie ponctuelle, par rapport à une perpendiculaire passant par le centre (9) de la sphère ou de l'élément sphéroïdale (2) et son point d'appui sur la première tôle (1).

7. Procédé conforme à l'une des revendications 1 à 6,
**caractérisé en ce que**
le premier matériau est un acier.

8. Procédé conforme à l'une des revendications 1 à 7,
**caractérisé en ce que**
le second matériau est de l'aluminium ou un alliage d'aluminium.

9. Procédé conforme à l'une des revendications 1 à 8,
**caractérisé en ce que**
le cordon de soudure (11) est obtenu sans contact, au moyen d'un dispositif de soudage (10) à commande électronique, situé à distance de la sphère ou de l'élément sphéroïdale, en particulier d'un dispositif de soudage par laser.

10. Procédé conforme à la revendication 1,
**caractérisé en ce que**
le dispositif de mesure (7) fournit au dispositif de soudage (10) des informations qui décrivent la position détectée de la sphère ou de l'élément sphéroïdale (2).
